Europäisches Patentamt

(19) European Patent Office

Office européen des brevets

(11) Publication number: **0 044 206**
**A2**

(12) **EUROPEAN PATENT APPLICATION**

(21) Application number: **81303168.9**

(22) Date of filing: **10.07.81**

(51) Int. Cl.³: **B 29 C 27/02**

(30) Priority: **10.07.80 US 168376**

(43) Date of publication of application:
**20.01.82 Bulletin 82/3**

(84) Designated Contracting States:
**DE FR GB IT**

(71) Applicant: **NORDSON CORPORATION**
**Jackson Street**
**Amherst Ohio 44001(US)**

(72) Inventor: **Cobbs, Walter H., Jr.**
**387 Cherry Valley Drive**
**Amherst Ohio 44001(US)**

(72) Inventor: **Huddleston, Robert J.**
**365 Erie Road**
**Vermilion Ohio 44089(US)**

(72) Inventor: **Smith, James C.**
**1605 Tait Street**
**Lorain Ohio 44053(US)**

(74) Representative: **Bowman, Paul Alan et al,**
**LLOYD WISE, TREGEAR & CO. Norman House 105-109**
**Strand**
**London WC2R OAE(GB)**

(54) Heat sealing processes and apparatus.

(57) Processes and apparatus for heat sealing materials together include the step of subjecting the materials to a sealing area providing a fluid bearing flow regime to produce a required heat, pressure and dwell time profile for sealing. A preferred embodiment includes a dual zone porous surface for supplying both heating and cooling fluids to the materials while they are subjected to a preferred pressure profile, thereby reducing tension in the softened or molten materials and reducing the time the materials must remain molten. The dual zone process may be used in different heat sealing flow regimes.

HEAT SEALING PROCESSES AND APPARATUS

This invention relates to the heat sealing of materials and, more particularly, to the heat sealing of materials by means other than directly contacting them with heating elements.

In typical heat sealing operations, where it is desired to join heat sealable materials together, it is generally known that three basic parameters apply. There must be sufficient temperature, pressure and dwell time of the materials, under the temperature and pressure conditions, that sealing can be accomplished.

In the past, thermoplastic films have been sealed together by compressing them between heated bars for a predetermined time and then releasing them. This operation has several well-known and significant difficulties, including fouling of the bars or release coverings used on them, burning of the materials, and the inability to quickly change the heating bar temperatures, such as for cooling the bars to accommodate intermittent interruptions in the sealing operation without burning the materials, or such as for heating the bars to quickly restart a sealing operation.

To avoid directly contacting the sealable materials with heater bars, it is known to blow hot air onto the materials with nozzles or through perforated plates or tubes to heat the materials. The action of the hot air as it is blown through the nozzles onto the materials will be referred to herein as the "jet impact" effect.

In addition to the "jet impact" effect provided by nozzles or by perforated plates or tubes, it has also been suggested to heat the sealable materials by blowing heated gas onto the materials through a porous or sintered plate. U.S. Patent No. 3,311,565 to Fanuzzi and U.S. Patent No. 3,488,244 to Lepisto each suggest this latter approach, and discuss the disadvantages of both the "direct contact" method mentioned above and the perforated plate or plural hot air stream method, also mentioned above.

Fanuzzi and Lepisto both describe the use of porous members disposed on each side of the materials to be sealed and the blowing of hot air through these members to impact on the materials, to heat them, to press them together, and to support them away from the surfaces of the porous members.

However the porous plates, when used as described in these two patents, themselves produce a "jet impact" effect on the materials. While a jet impact effect produced by porous plates may not have all the disadvantages as the perforated plate compared in Fanuzzi, for example, it continues to produce significant disadvantages of its own. These include undesirable excesses of tension and stress in the molten seal area due to imbalance of the sealing films when subjected to the jet impact area.

We have discovered that porous plates can be used in an entirely different fluid flow regime which has none of the disadvantages of the "jet impact" effect, and which provides significant advantages of control, seal quality, and speed of sealing operations, over the devices described in Fanuzzi and Lepisto.

While discovery of the aforementioned different fluid flow regime provides certain advantages as mentioned, we have discovered that such new flow regime also produces, in some operations, inherent material control and resulting seal difficulties. Accordingly, a second, important aspect of the invention is directed to an improved process and apparatus both for overcoming such difficulties and at the same time, providing substantially improved seals and sealing operations.

A method of materials in accordance with the invention includes the steps of passing the materials through at least one fluid bearing sealing area, which area is defined in part by at least one porous member having a porous surface, transmitting heated fluid through the porous member at a temperature sufficient to raise the materials to a temperature at which they can be heat sealed together in a predetermined location, and maintaining a predetermined distance between the porous surface and the materials and a predetermined fluid flow rate through the porous member to generate a fluid bearing flow regime to support and compress the materials for heat sealing.

The preferred embodiment utilizes a fluid bearing flow regime produced by fluid flowing through and from a porous element and providing a non-stagnant boundary layer of fluid moving, not perpendicularly, but parallel to the porous element and the material to be sealed.

This particular type of flow regime will be hereinafter referred to as the "air bearing" or "fluid bearing" flow regime, as opposed to the "jet impact" flow regime produced by either perforated plates or tubes, nozzles, a plurality of air streams, or by prior porous plate operations.

Well-defined distortionless seals are produced and finished in a single sealing area without directly contacting the films.

The invention enables control of the movement, forces and stresses in sealable materials during a heat sealing operation when the materials are supported by fluids.

In accordance with a second aspect of the invention a zoned porous element operates in the air bearing flow regime just mentioned and produces both heated and relatively cooled fluid at the same time for both heating materials to seal them, and for cooling materials within the operative perimeter of the same porous element. This has the distinct advantage of exposing the materials to be sealed to the required parameters of heat, pressure and dwell time within a single sealing area, and eliminates having to disturb the molten or softened materials prior to pressure or cooling application.

For purposes of describing the first aspect of this invention, and for clarity of illustration of its second aspect, and their interrelation in a preferred embodiment, it is necessary to have an understanding of the true physical nature of a fluid bearing flow regime as contrasted to a jet impact flow regime. There are several distinctions to be made. The first is the distinction between the jet impact effect provided by perforated plates or tubes, nozzles, or other contrived plural air streams, and that jet impact effect provided by operation of the porous elements of the type described in detail in the aforementioned Fanuzzi and Lepisto patents. This first distinction is described in detail in the Fanuzzi patent.

Much more important is the distinction between the jet impact effect which can be provided by porous plates, as discussed in Fanuzzi, and the true air or fluid bearing effect which porous elements can be used to provide according to this invention. This second distinction between sealing operations using a porous plate in a jet impact regime on one hand, and in a fluid bearing regime on the other, forms the basis for the first aspect of this invention. This distinction also makes the second aspect of this invention, i.e. the zoned porous element, even more important, since the zone porous element is extremely useful to the air bearing flow regime produced by a porous element operating according to this invention. This second aspect of the invention, however, , is also believed to be useful in the jet impact flow regime produced in a jet impact flow regime provided by a porous plate.

In considering the distinction between the jet impact flow regime and air bearing flow regime when using a porous element, it is important to note the actual distance between the face or surface of the porous element and the film. As the film is brought closer to the surface of the porous element, the physics of the fluid therebetween, and the fluid's effect on the film, go through three drastic changes or stages.

First, the film may be spaced at some selected distance from the surface, near enough that fluid exuding therefrom impacts on the film. The distances through which this action takes place will be referred to as the jet impact region.

Secondly, as the film is brought closer to the surface, and assuming the same fluid flow rate through the porous plate, a strange phenomena occurs as a result of the Bernoulli effect. That is, the action of the fluid exuding from the porous plate actually tends to draw the film into engagement with the surface. In the region of distances between the film and the surface where the Bernoulli effect dominates, the capacity of the porous element and the exuding fluid to support the film away from the surface is thus a negative value. This region of distances will be referred to as the negative bearing region.

Thirdly, and according to the invention, as the film even more closely approaches the surface, and still assuming the same fluid flow rate through the porous element, the film crosses a transition distance or point where the capacity of the porous element and exuding fluid to support the film increases from a negative to a positive value. From this transition point down to a nearly zero distance between the surface and the film, the porous element and the exuding fluid operate in what is referred to as the true air bearing or fluid bearing region.

The stiffness of the bearing, i.e. its capacity to support the film and any back-up load thereon, increases as the film moves closer to the surface in the fluid bearing region.

Of course, the difficulty in smoothly handling molten or softened film during sealing is magnified when the film is in the negative bearing region. The film would first be drawn toward the porous surface, then as it neared the surface, and transcended into the fluid bearing region, would be pushed away from it. This fluctuation in a film, particularly when molten, wrinkles and distorts the film, rendering any seal therein unacceptable.

The different effects of fluid exuding from a porous member on a film in the jet impact and fluid bearing regions are critical to any sealing operation and further serve to distinguish the jet impact flow regime from the fluid bearing flow regime. For example, in the jet impact region, a stagnant boundary layer of fluid is region, a stagnant boundary layer of fluid is formed at the film surface and is supported by the perpendicular impact of fluid exuding from the porous element. This stagnant boundary layer does not tend to flow across the film surface, and substantially diminishes the capacity of the exuding fluid to transfer heat to the film for sealing. In effect, the stagnant boundary layer tends to insulate the film surface from the hottest fluid just exuding from the porous element. The flow of fluid from the surface of the porous element may be constant and uniform, however, it is primarily at a direction perpendicular to the film surface and, in creating the stagnant boundary layer of fluid at the film's surface, diminishes the transfer of heat to the film.

The physics of heat transfer capacities of fluids are such that more heat is transferred to adjacent surfaces by fluid moving with some turbulence thereagainst, than in cases where the flow is less turbulent. The nature then, of the stagnant boundary layer in the jet impact region insulates the film surface from maximum turbulent flow of fluid and thus diminishes the coefficient of heat transfer between the fluids and the film.

Accordingly, when using a porous element for sealing films, in a jet impact flow regime, it is necessary to provide the necessary dwell time of the film in the porous element area be lengthening the porous elements, or by decreasing the film speed in that area, or both. This is necessary to ensure that sufficient quantities of heat will be transferred to the film for sealing, but it constitutes a disadvantage in that it limits the speed of any sealing operation. Moreover, longer porous elements or film speeds, or both, increase the time when the moving film is molten for sealing. The longer the film must remain molten or softened, the more susceptible it is to wrinkling and distortion. This increases the need to hold the film steady, and makes distortionless, wrinkleless seals more difficult.

Another aspect of the distinction between the jet impact flow regime and the fluid bearing flow regime is the effective pressure which each provides. In heat sealing films, for example, pressure is one of the operative parameters, it being necessary to effectively press the films together, during heating, so they can be sealed together. Generally, and for equal flow rates, the fluid bearing flow regime provides greater pressures than the jet impact flow regime. The fluid bearing flow regime operates effectively in a relatively stiff bearing range and exerts more pressure, uniformly, on the films than where the films are further spaced from the porous element in the jet impact region. Moreover, this greater pressure is provided without unduly stressing the softened or molten film seal area since the net horizontal forces acting on the film in the fluid bearing regime are zero, as will be discussed later.

Accordingly, with the pressure potential of the fluid bearing flow regime, it is possible to effect a finished seal, without wrinkling or distortion, in the confines of a single bearing area operated in the fluid bearing flow regime and without requiring downstream compression of the seal in the film. This minimizes stress and tension within the film seal area since the seal is totally compressed while within the bearing perimeters. It is unnecessary to transport the film, while soft or molten, to a separate compression station, and thus through different pressure areas or profiles which could stress and wrinkle or distort it.

When, according to the invention, a film is introduced to the true fluid bearing region for sealing, several advantages are attained. First, in the fluid bearing region, there is no stagnant boundary layer of fluid between the film and the porous surface. There is thought to be a boundary region of fluid in this area, but this boundary region is moving parallel to the film surface and is not stagnant. In fact, the entire air flow is moving outwardly of the small space between the film and the porous surface, and parallel to them. This is to be contrasted to the substantially perpendicular flow of fluid from the porous plate when it is operated in the jet impact flow regime.

Since the major flow of air in the bearing flow regime is directed laterally of the bearing area, the dwell time of the fluid, i.e., the time it takes to move from the porous surface to outside the bearing area or perimeter, is very short. It might be expected that such fluid with such short dwell times would function to carry away most of its heat, rather than imparting it to the film, thus requiring additional film dwell time in the hot bearing area in order to provide a seal. In fact, this expected disadvantage has not occurred in the process of the invention for several reasons.

Primarily, while the fluid dwell time is rather short, the nature of the moving non-stagnant boundary layer operates to permit a greater heat transfer from fluid to film than does the stagnant boundary layer in the jet impact flow regime. This is due to the flow turbulence of the fluid at the film face in moving across that face, rather than, in insulating that face by a stagnant boundary area. This action produces a substantial heat transfer coefficient which signifies that sufficient heat for sealing can be transferred to the film in the fluid bearing flow regime for relatively short film dwell times and relatively short porous elements.

One reason believed responsible for the non-stagnant moving boundary layer of fluid and the high coefficient of heat transfer in the fluid bearing flow regime according to the invention is found in the characteristics of the fluid flow from the surface of the porous element to outside the perimeter of the element. That is, as the fluid exudes from the center of the surface, it moves laterally outward toward the perimeter. It must be appreciated, however, that as this fluid moves outward, it is joined by additional fluid also exuding from downstream portions of the surface and moving laterally outward between the porous surface and the film. Accordingly, the fluid flow is greatly varied in the bearing region, and is not uniform, as contrasted to the different uniform fluid flow described in the Fanuzzi patent, for example. In the fluid bearing flow regime, a greater quantity of air is moving laterally at the edges of the porous element than at the centre. Thus, the fluid flow is constantly accelerating. This flow variation, while producing substantial bearing pressures, also generates the turbulent, moving, non-stagnant boundary layer which efficiently transfers heat to the film.

Accordingly, the invention provides significantly increased heat transfer capacities and substantially shortens necessary molten film dwell time, which is beneficial to film handling and seal quality. One overall result then, from sealing in the true fluid bearing flow regime, is increased production of sealed materials. Moreover, it should be appreciated that the increased heat transfer capacity permits a lesser temperature differential between the film sealing temperature and the porous element temperature. This facilitates intermittent operation making it easier to quickly heat or cool the porous element and the fluid exuding from it as will be appreciated.

By way of further explanation of the process of the invention, it should be appreciated that there is a significant difference in the tension and stress exerted on the film when it is treated in a jet impact flow regime produced by a porous plate, than when handled in a fluid bearing flow regime produced by a porous plate. Particuarly, in the jet impact flow regime, the stagnant non-moving boundary layer distributes the forces of the perpendicularly moving jet flow. In effect, this creates a situation of imbalance where the film is free to move laterally in uncorrected fashion, and where lateral forces exerted on the film tend to pull the film toward one side or the other of the apparatus.

According to this invention, it is desirable to provide a fluid bearing flow regime which balances the film such that it floats in the bearing area, and does not tend to move out of the bearing area. This is accomplished in the fluid bearing flow regime by a boundary layer producing uniform pressure on the film but also a non-uniform lateral flow outward such that the net component of forces is essentially zero. Under these conditions in the fluid bearing flow regime, any horizontal forces tending to distort the molten film are minimized if not totally eliminated. As a result, film in the bearing area floats and is self-centering. In the jet impact regime, forces acting on the film do not net out to zero and the film tends to move out of the bearing area.

In order to obtain such a balanced floating action in the film in a fluid bearing regime, it is generally necessary to precisely construct the porous element surfaces and their disposition. In one embodiment of the invention, for example, opposed porous surfaces are disposed about .004" apart with no more than about ± .0005" variation. Variations in parallelism much greater than this will unbalance the film and produce wrinkles or distortion in it.

Of course, since the film will usually extend laterally beyond the perimeter of the bearing area, it usually has a portion for sealing in the bearing area and an unsealed portion outwardly thereof beyond the bearing edge. It is at the edge of the porous surfaces where flow turbulence is at a maximum. Such turbulences can be detrimental to seal integrity and appearance for many applications. It is to this circumstance that the second aspect of the invention is, in·part, directed.

If the molten or softened film is drawn out of a heated bearing or jet impact area, it is subjected to these edge turbulences while it is in a very deformable condition. Such flow turbulence, considering the high temperature of the heated fluid and the molten conditions of the film, can cause distortion and wrinkles in the softened or molten film and in the sealed areas. Since the heated fluid exhausts from the edge of the porous element in the random fashion and in all directions, the film is heated non-uniformly and the edges of the sealed areas are non-uniform.

Accordingly, the invention further contemplates means for cooling the films at the seal's edge. A preferred embodiment includes a zoned porous element for cooling the sealed area within the confines of the porous element and for precisely defining a seal edge. Heated fluid exudes from a centre are of the porous element in a bearing flow regime for heating the films. A cooler fluid exudes from a peripheral area of the same porous element, but within the bearing perimeter, and the pressure profile it provides, cools the film below the melting temperature along a precise line inside the turbulent edge areas. Any turbulence then affecting the film acts on a cooled stable film, as opposed to a heated, semi-molten unstable film, and is not effective to wrinkle or distort the film or the seal. This invention thus provides precise edge definition of the seal as a function of the second zone of cooler fluid within the confines of the same porous element.

While this zoning concept described could also be used in a jet impact flow regime or in a fluid bearing flow regime, the zoned element is particularly useful to the fluid bearing flow regime operation, since fluid loss and turbulences are generally greater at the edges of the fluid bearing element than the edges of the jet impact flow regime element. Use of the zoning feature makes it possible to maintain the same or other regulated sufficient pressures on the sealed area during both heating and cooling within the same seal area. This minimizes both travel time of the film while it is softened or molten and movement of the softened or molten film through various stations and turbulent edge areas where tension and strain, causing wrinkling, cannot be minimized. Further, the zoning feature serves to stabilize the sealing operation, reducing distortion and wrinkling of the seal and adjacent film. As a result of these factors, the spaced element provides necessary cooling during a time when the forces acting on the film in·the fluid bearing regime net out to be zero. Thus, the heat and pressure profile to which the film must be subjected for sealing is applied at the precise time during which tension and, stress forces acting on the film are at their lowest level. This significantly enhances seal quality.

The rapid quench provided by the zoned element thus provides a precise seal edge and substantially reduces distortions in the sealed areas and in the film adjacent to the seal.

**0044206**

The zoned porous element concept then, according to the invention, cooperates with the fluid bearing flow regime in a unique way to produce a finished cooled seal, and within a single heat seal bearing area.

Finally, while much of this description has been in connection with fluid bearing sealing means defined by two opposed porous. elements, it should be appreciated that  the invention also contemplates a fluid bearing sealing area operated in the fluid bearing flow regime and defined by a single porous element and a silicon rubber back-up pad, for example, supporting the materials for sealing.  Such latter bearing area is particularly useful for producing transverse cross-seals in films, for example, which are sealed longitudinally by two opposed porous elements, and transversely by a single porous element and back-up pad or other support.  It is also useful for static sealing operations or for intermittent sealing operation when fluid exuding from the porous element is quickly heated and cooled.

Accordingly, the invention contemplates a heat sealing process utilizing a porous element operated in a fluid bearing flow regime, preferably, but not necessarily, in combination with multiple fluid zones in the same porous element for heating and for cooling in one seal area. This invention obtains many advantages.

First, a non-oscillatory, single step heat sealing process is provided in a single seal area wherein in some embodiments there is no contact of sealer apparatus to the materials being sealed, pressure is uniformly applied to the materials, sealing heat is efficiently transferred, and horizontal forces are minimized to reduce seal and film wrinkling and distortion during both heating, compression, and cooling. The invention provides processes and means by which gas flows and temperatures can be easily and quickly controlled for intermittent or special operation. The zoned porous surface can be used to accommodate different temperature zones, parallel or in sequence as required, or to produce zones of varying pressures, such as by stepping the surfaces, or varying the flow rates in the respective zones, should that be required. Since sealing is accomplished through a single step process or area, multiple sealer areas can be easily provided as desired, without downstream compression or cooling stations, to handle a varietly of sealing tasks, such as multiple laminates, package sealing and the like.

These and other advantages will become readily apparent from the following detailed description of a preferred embodiment of the invention, and from the drawings in which:

Figure 1 is a graph illustrating the characteristics of jet impact flow, the Bernoulli effect, and fluid bearing flow according to the invention;

Figure 2 is a graph illustrating flow conditions of fluid bearing and jet impact flow regimes;

Figure 3 is an illustration of fluid bearing flow regime sealer according to the invention;

Figures 4 and 5 are respective frontal and end elevations of another embodiment of apparatus according to the invention including a single element sealer having a single zone porous member;

Figures 6 to 11 are diagrammatic illustrations of trial runs made with the apparatus of Figures 4 and 5, and Figures 7, 9 and 11 show sealed films resulting from the operations depicted in Figures 6,8 and 10, respectively;

Figure 12 is an end elevation of a modified embodiment of the invention similar to 4 and 5, but including a two element sealer wherein two porous members, each having a single zone, are used;

Figure 13 is a cross-sectional view of a two zone sealer element according to a preferred embodiment of the invention;

Figure 14 is an expanded perspective view of a two zone porous member such as that of Figure 13;

Figure 15 is a diagrammatic illustration of a preferred embodiment of the invention shown in Figures 14 and 16 to 22, including a two element sealer wherein each element has dual zones;

Figures 16 and 17 are respective frontal and end elevational views of a preferred embodiment of the invention including a two element sealer wherein each element includes a two zone porous member;

Figures 18 to 21 are diagrammatic illustrations of trial runs made with the apparatus of Figures 7a, 7b, 8 and 9;

Figure 22 is a plan view of the relationship of a two zone porous element, according to the invention, to a film to be sealed; and

Figure 23 is an end elevational view of a modified form of the preferred embodiment including a single-element sealer having a two zone porous member.

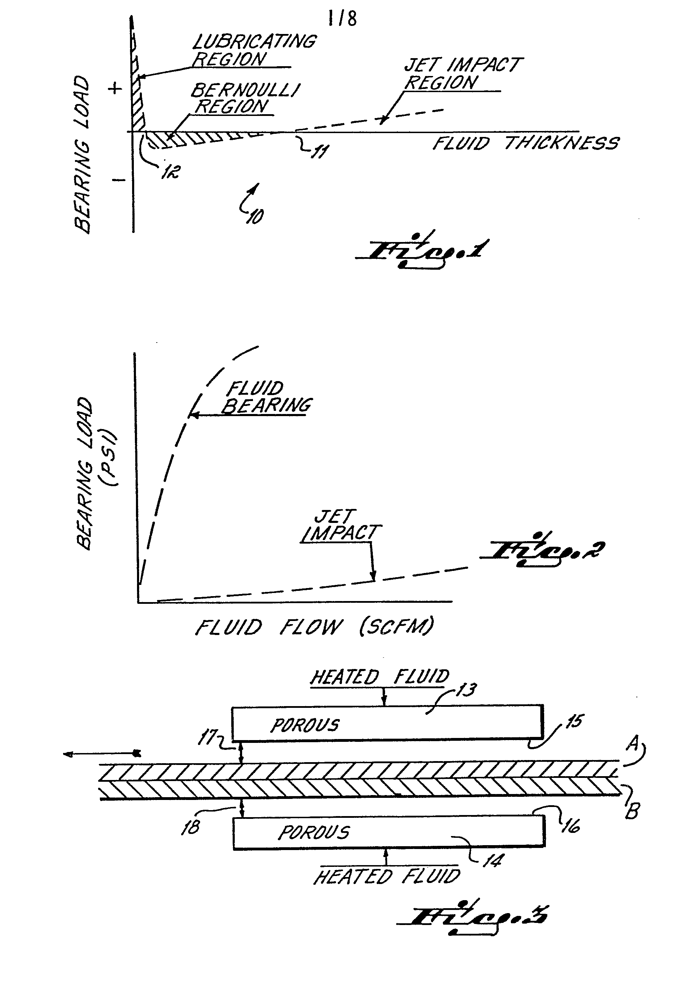

Turning now to the drawings, there is shown in Figure 1 a graph 10 which illustrates the load bearing characteristics of apparatus utilizing porous members to support a film therefrom. In figure 1, the horizontal axis represents the thickness of the fluid between the surface of the porous member and the film or object
supported in spaced relation to that surface. The vertical
axis represents the bearing load capacity of the apparatus.
It will be recognized that the invention is suitable for
heat sealing of varied materials, and for illustration only
will be hereinafter referred to without intending any
limitation, in connection with sealing thermoplastic films.

It will be appreciated that for a given fluid
flow, fluid thicknesses greater than that indicated by
the point 11 on the horizontal axis, generate or produce
a jet impact flow regime.

That is, if the distance between the porous
surface and the film supported is greater than that indicated
at point 11, then for the same flow rate, the fluid will
operate in the jet impact flow regime, and not in the
fluid bearing flow regime. The jet impact flow regime
provided by the porous member is as described in the foregoing discussion. That is to say, fluid exudes from the
porous surface of the porous member in a direction
perpendicular to the film which is supported away from the
porous surface. The exuding fluid creates a stagnant,
non-moving boundary layer against the film. While in the
jet impact flow regime, a positive bearing load is provided;
this flow regime is limited by the various disadvantages described above, including the fact that the horizontal forces on the film do not net out to be zero. This tends to stress the film horizontally, causing wrinkles or other distortion. Also, the capacity of the apparatus to transfer heat from the fluid to the film is significantly reduced by the stagnant, non-moving boundary layer.

As the thickness of the fluid between the porous surface and the film is reduced, the physics of the operation cause an instability in the film as a result of the Bernoulli effect. (See page 256, Modern College Physics, by H.E. White, VanNostrand, N.Y., 1960, paragraph 28.8, illustration (b).) The Bernoulli effect tends to create a negative bearing load capacity such that as the film moves through the range of distances indicated between points 11 and 12 on the graph, a negative force is exerted on the film, tending to pull it toward the porous surface. It is only when the film nears a distance to the porous surface, such as that distance indicated by the point 12 on the graph, that the apparatus begins to operate in a true fluid bearing flow regime and the capacity of the bearing to bear a load increases significantly into a positive value range.

Accordingly, it will be appreciated that as the film which is to be sealed moves through various distances away from the porous surface, as illustrated on the graph of Figure 1, it is subjected to significant stresses which provide turbulence and instability in the film. For example, when the film is supported away from the porous surface a distance greater than that indicated by the point 11 on the graph, the load bearing capacity of the apparatus is a positive value (even though operation is in the jet impact flow regime). As the film tends to move closer to the porous surface, however, it moves into the Bernoulli region where the film is drawn toward the porous surface. This fluctuation in the film causes the film to move and creates stresses therein which may cause distortion or wrinkling when the film is heated for sealing.

Once the film is moved very close to the porous surface, such as that distance indicated by the point 12 on the graph, or less, then the bearing load capacity increases significantly and the apparatus operates in an improved fluid bearing flow regime according to the invention wherein the fluid between the film to be sealed and the porous surface does not create a stagnant, non-moving boundary layer against the film.

Rather, the fluid between the porous surface and the film moves in a generally horizontal direction, parallel to the porous surface and the film, and supports the film providing a significant bearing pressure. In addition, the laminar flow of the fluid is of such flow turbulence as to effectively transfer a significant portion of the heat of the fluid to the surface of the film for sealing. At the same time, and despite these laminar flow turbulences, the tensions and stresses in the film are minimized by the fact that when the apparatus operates in fluid bearing flow regime, the horizontal forces acting on the film net out to be zero. This is accomplished even though substantial pressure is exerted on the film for the purposes of providing sufficient sealing compression.

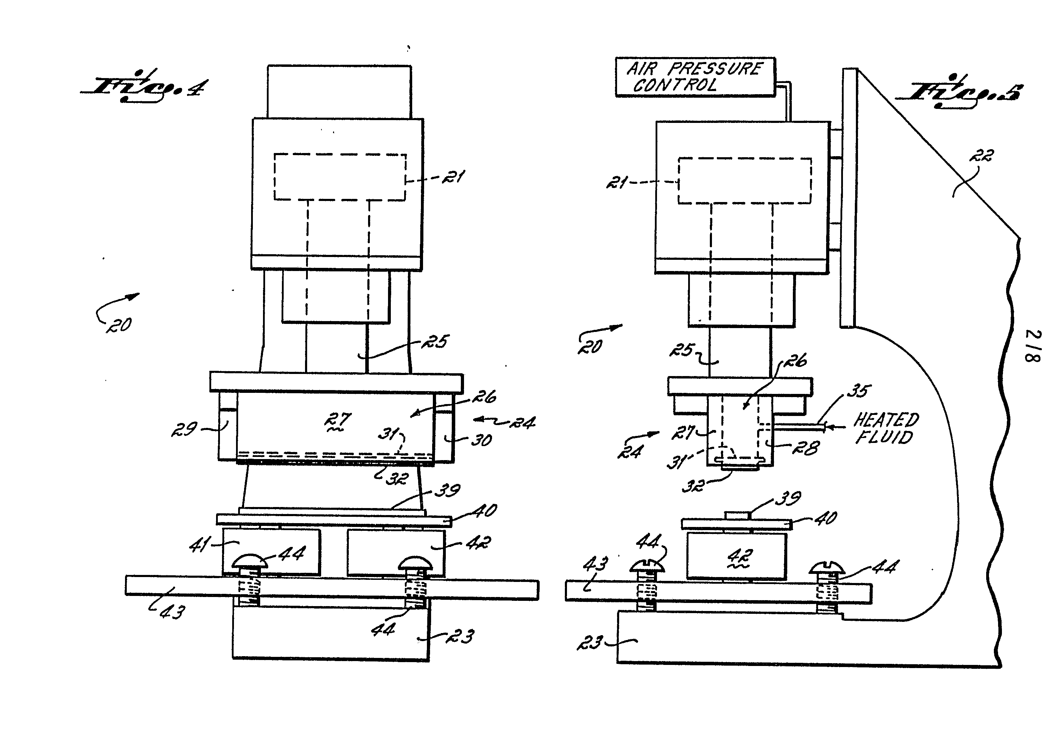

Further differences in the flow conditions for a fluid bearing flow regime and for a jet impact flow regime, each created by flow through a porous surface, are illustrated in the explanatory graph of Figure 2. This graph relates the rate of fluid flow to bearing load and contrasts the fluid bearing flow regime to the jet impact flow regime. As illustrated by the graph, the bearing load capacity increases at a greater rate in the fluid bearing flow regime than in the jet impact flow regime when the fluid flow is increased. Stated in another way, it takes a great deal more air flow in the jet impact flow regime to produce a given bearing capacity, than it does in the fluid bearing flow regime to obtain the same bearing capacity.

This difference is highly significant when the porous member is to be used for sealing films. When sealing thermoplastic films, for example, sufficient heat and pressure must be applied to the films for a predetermined dwell time. When the jet impact flow regime is used, the necessary pressure would come only at the expense of substantially increased air flow. This would generate such substantial air turbulence along the edges of the apparatus that wrinkling and distortion in the softened or molten film would be substantial. In all known cases, then, downstream compression rollers for example, are required to produce the necessary sealing pressures not provided by the jet impact flow regime.

When one or more porous members are used in a true fluid bearing flow regime, however, sufficient sealing pressures are provided solely by the exuding fluid within the seal area and no downstream compression is nessary, even though the flow rate is substantially less than would be required for the same pressure in a jet impact flow regime. In the fluid bearing flow regime then, the necessary pressures for sealing are provided without the disadvantage of substantially increased flow rates.

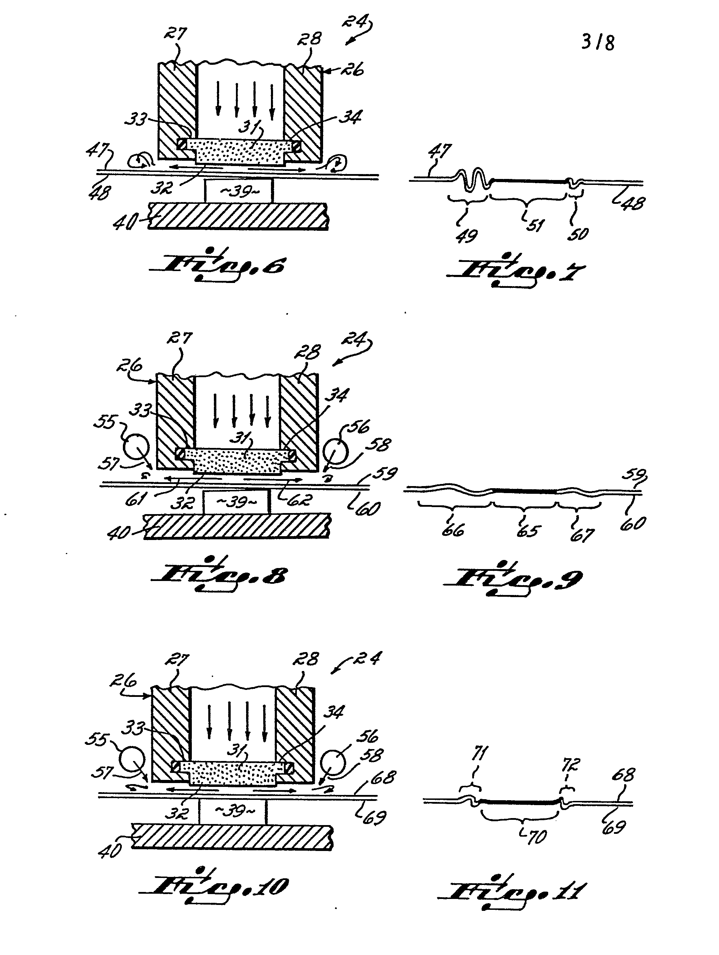

The operation of a sealing apparatus in accordance with this invention, and in the lubricating region or the fluid flow regime provided by the fluid bearing, is diagrammatically depicted in Figure 3. In Figure 3, two porous elements 13 and 14 are disposed on either sides of two thermoplastic films A and B for sealing the films together. As indicated in the figure, heated fluid is supplied to the porous members 13 and 14 such that the fluid is dispersed through the porous members and exudes from the surfaces 15 and 16 respectively thereof.

In one embodiment if the invention, the films A and B are handled so that they can be sealed while moving between the two porous members in the direction, for example, of the arrow C in the figure. The heated fluid heats the two films, and at the same time presses them together to cause complete sealing while the films move between the porous members. In other words, the length of the porous members when taken in conjection with the speed at which the film moves past the surfaces 15 and 16, and with the heat and pressure provided by the fluid operating in the fluid bearing flow regime, provides sufficient dwell time adequate to seal the films A and B together.

In such an appratus according to the invention, it is critical to maintain the distance between the surfaces 15 and 16 and the respective films A and B in a predetermined range. Even more particularly, and in accordance with the invention, it is necessary to maintain the distances indicated by 17 and 18 in a preselected range of values which will insure that the appratus is operating in the lubricating region or the true fluid bearing region depicted by the graph in Figure 1. This region is found from the point 12 on the horizontal axis thereof inwardly, or to the left of the point 12. Specifically, it will be appreciated that the distances indicated at 17 and 18, respectively, in Figure 3 are approximately .001 inches and less, in order to insure that the sealing apparatus is operating in the true fluid bearing flow regime for a typical air fluid flow through the porous members. Of course, this distance may vary somewhat depending on the exact nature of the porous member and the characteristics and parameters of the fluid flowing through the porous member. It is important to note, however, that whatever the porosity of the member, and whatever the fluid flow rate, the appratus according to the invention is operated in the true fluid bearing flow regime and the distances 17 and 18 are not sufficiently large so that the apparatus could operate in the Bernoulli region, or in the jet impact region as indicated in Figure 1, when sealing films.

The porous members which have been discussed above can be made from any material such as metals, for example, which are well known in the prior art. The members may be of any particular size or shape desired for the provision of a particular seal. Moreover, such porous members may be made by any known process such as by sintering, for example. One particular porous member which we have found suitable is made and has the parameters which are described as follows:

> sintered 316 stainless steel
>
> average particle diameter - 5 microns
>
> 40-60% void space
>
> 96% sintered in gravity mold
>
> Made by Astromet, Inc., Cincinnati, Ohio.

## SINGLE ZONE SINGLE ELEMENT SEALER

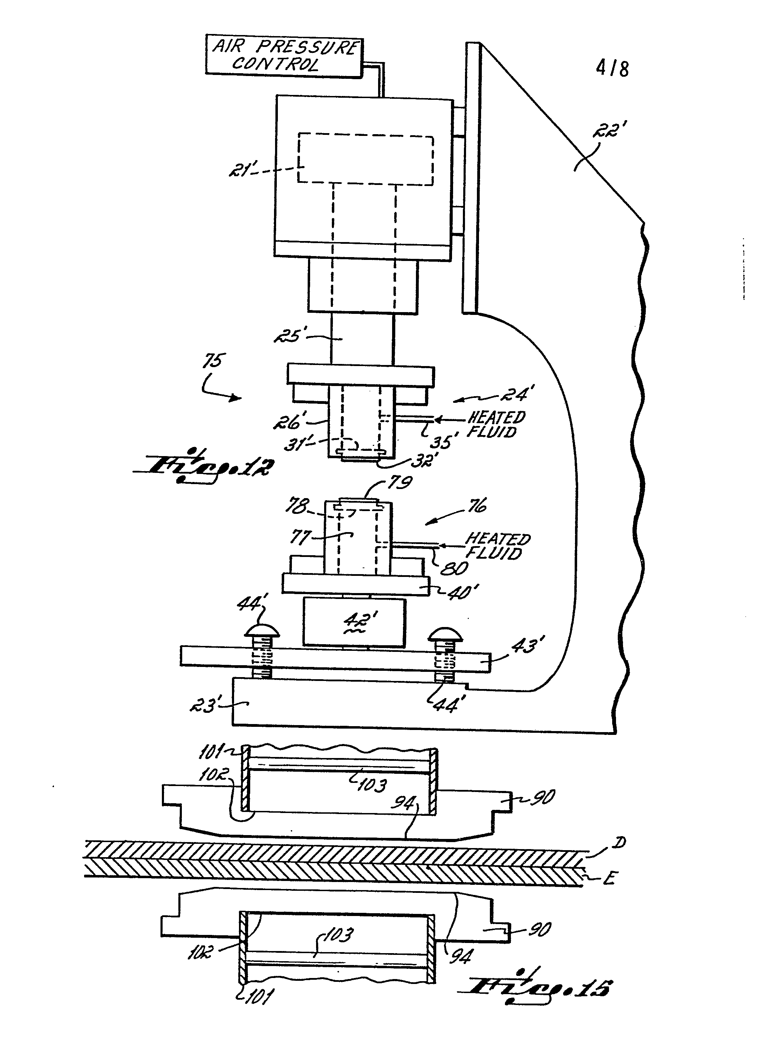

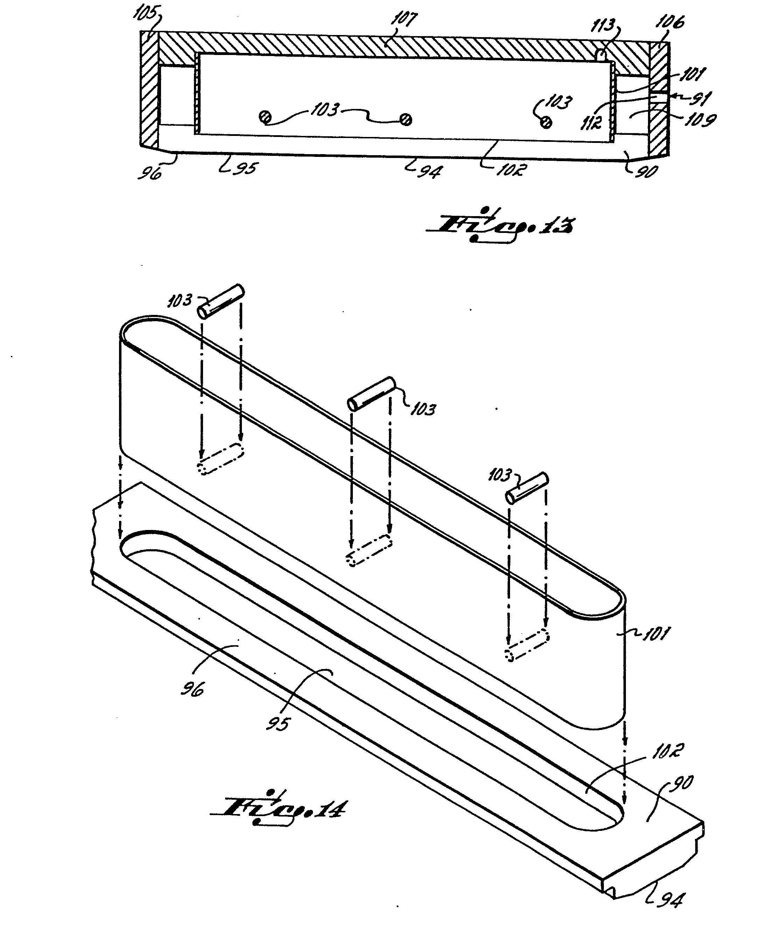

Turning now away from the illustrative Figures 1 through 3 and to Figures 4 and 5, one embodiment of the invention is shown at 20 in each of these figures. It is to be understood that the sealing processes and methods which are described herein can be carried out by any suitable apparatus. It is further to be understood that such apparatus may be particularly adapted to the high speed production sealing of thermoplastic films or of any other types, forms, shapes, and sizes of heat sealable materials. As an example, the processes and apparatus described herein may be readily adapted to sealing thermoplastic films together for the purpose of forming seamed pouches of the film, or for many varied packaging or other purposes. While the apparatus and processes particularly described herein are directed to providing a seal in two flat films, the invention also contemplates utilization of the processes described herein for the production of seals and sealable material wherein the material is contoured or shaped in many different forms.

Considering now Figures 4 and 5, the apparatus 20 comprises a known stationery heated bar heat sealer modified according to the invention. The particular heat sealer which has been modified, a Model 205 Hot Die Blister Heat Sealer of the lab type is provided by Packaging Industries, Inc. of Hyannis, Massachusetts. This particular heat sealer was selected for modification since it included an air piston 21, a sturdy C-frame 22, and a base 23. These elements are structured to provide a sufficient distance between the lower end of the air piston 21 and the base 23 for the acceptance of sealing apparatus according to the invention as will be described herein.

For the purpose of clarity, several features of the sealer have not been shown in the drawings of Figures 16 and 17. For example, the lab sealer may also include stabilizer rods or bars extending from the top portion of the frame 22 downwardly for the purpose of engaging the apparatus mounted at the lower end 25 of the air piston in order to maintain it against rotation. Such devices may be spring loaded in order to assist the rapid return of the piston to an upper position such as that shown in Figures 4 and 5.

While the original Model 205 heat sealer included a heated aluminium plate for the purpose of sealing materials between the plate and a back-up member, the sealer has been modified, according to the invention, to include a fluid sealing apparatus 24 mounted at the lower end 25 of the air piston. The fluid sealing apparatus 24 includes a manifold 26, having forward and rearward walls 27 and 28, and end walls 29 and 30. At the lower end of the manifold 26, a porous element 31 is disposed such that a lower porous face or surface 32 of the porous element 31 is directed in a downwardly direction. Such porous element is of a type which has already been described.

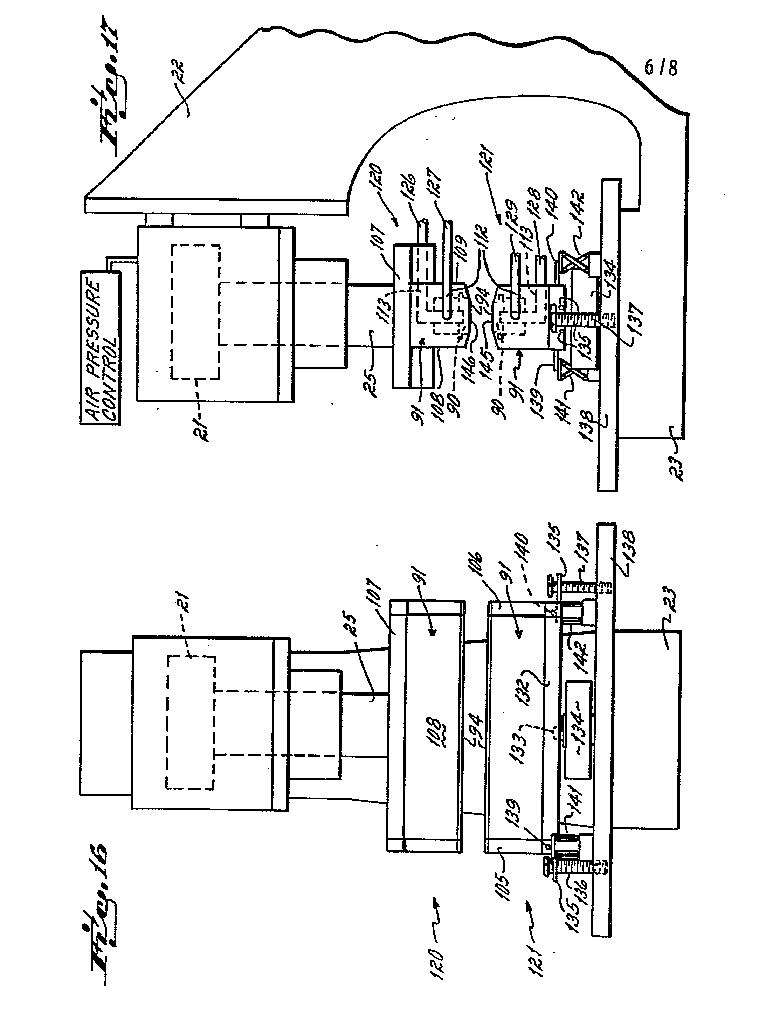

The details of the relationship of the porous element 31 to the manifold 26 is perhaps best seen in Figures 6, 8 and 9, wherein the porous element is shown as being somewhat T-shaped. It is disposed at the bottom of the manifold 26 and, more particularly, within appropriate retaining slots 33 and 34 of the walls 27 and 28, respectively. When heated fluid is pumped into the manifold 26 such as through the conduit 35, it fills the manifold, establishes a pressure, and them moves through the porous element 31, exuding from the porous surface 32 thereof.

Continuing with the description of this embodiment of the invention, the apparatus 20 includes a back-up member such as a silicon rubber pad 39 mounted on a support plate 40. Plate 40 is mounted on two load cells 41 and 42 for the purpose of determining the pressure generated against the pad 39. The load cells 41 and 42 are mounted on an adjustable base plate 43 which is provided with a plurality of adjusting screws 44 for aligning the pad 39 in a horizontal plane.

In order to provide information as to the pressures actually exerted on the films to be sealed, the load cells are connected to electronic calculation and readout means (not shown). These are calibrated to readout pressure values in terms of "P.S.I." exerted on the films.

In use, materials to be sealed are disposed between the pad 39 and the surface 32 of the porous element 31. The air piston 21 of the apparatus 20 is energized by the application of air pressure through an air pressure control means (shown only diagrammatically in Figure 5) to lower the piston and to bring the porous member 31 into proximity with the pad 39 and two or more films which are disposed therebetween.

The relationship of the porous element to the films and to the pad is critical. According to the invention, the porous element must be brought close to the uppermost film and within a distance sufficient to provide a fluid bearing flow regime between the porous surface 32 and the film. More particularly, and in one embodiment, the porous surface 32 must be brought to within about .001 inch of the film in order to insure a fluid bearing flow regime operation with respect to sealing. When the porous element is in this position with respect to the film, heated fluid can be applied through the porous element at a predetermined flow rate, both to raise the temperatures of the films for sealing and to press them together for a sufficient length of time that the films are appropriately sealed.

Not only is the distance between the porous element and the films important, but it is also important to consider the parallelism of the porous surface 32 with the pad 39, this relationship being adjustable by the various adjusting screws 44. We have found that when these elements of the invention are not parallel, the films which are sealed are distorted more along one edge of the seal than along the other.

A number of tests and trials were made using the apparatus of Figures 4 and 5. Exemplary ones of these are diagrammatically illustrated in Figures 6 to 11, and will be described in the following separate examples.

EXAMPLE NO. 1

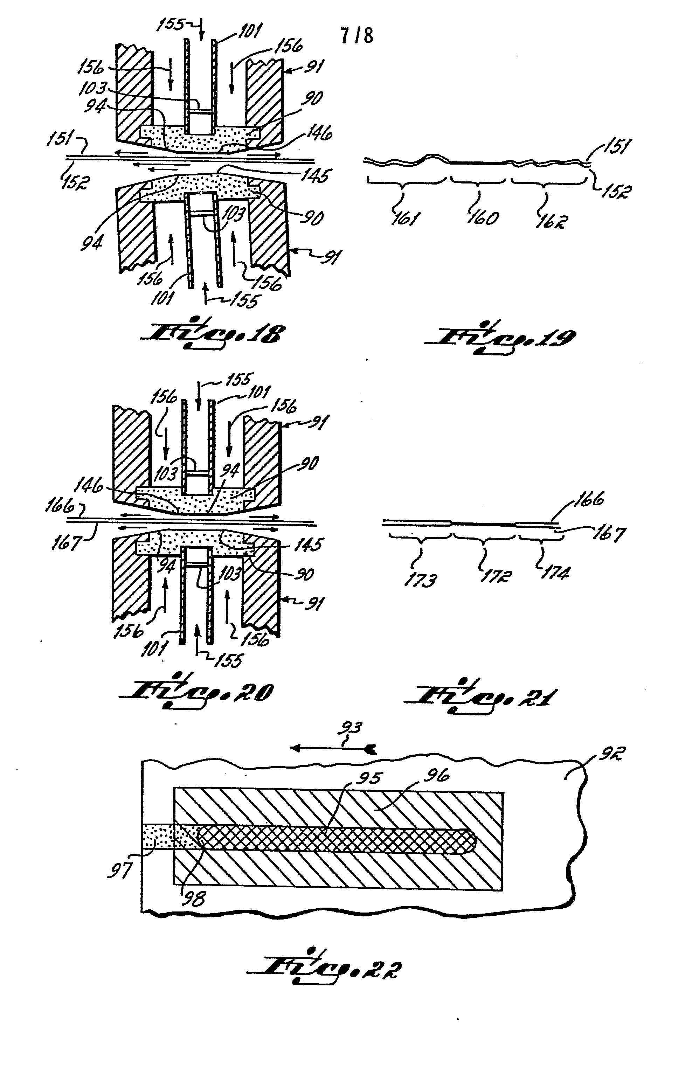

This example is illustrared in Figures 6 and 7. A single zone porous element 31 having porous surface 32 with a porosity of approximately 5 microns was mounted on the air piston and urged toward a silicon rubber backing pad to a distance varying from about .0005 to about .0015 therefrom. The porous surface was not parallel to the pad surface and the fluid bearing is thus considered to be unbalanced. Figure 6 of the drawings illustrates this set up: a heated fluid comprising hot air at a temperature of about $350^{\circ}F$ was supplied to the porous element under approximately 20 psig, resulting in a through flow rate through the porous member of about 7 cfm.

Both polypropylene and polyethylene films were sealed together using this set up depicted by Figure 7. The polypropylene films were sealed in three different tests, varying only by the amount of pressure applied to the films. The polyethylene film was sealed with a single pressure operation.

Considering in detail the sealing of polypropylene films, two layers or films 47 and 48 of balanced oriented polypropylene coated in their adjacent surfaces with polyvinylidine chloride, and better known in the trade as Hercules film type CB501/IS .070 gauge coated polypropylene, were disposed on the pad 39 and the porous member was brought to within the appropriate distance of the films (about 0.0005 to about 0.015 inches) so as to provide a fluid bearing flow regime between the porous element and the films. Heated fluid as described above was applied through the porous element to the films for a period of about one second. The two layers were sealed together but with distortion in the films at the edges of the seal in each of the runs wherein pressure on the films was applied at 5, 10 and 15 psi, respectively. Such distortion is illustrated in the areas 49 and 50 adjacent creases in seal area 51.

It was noted that pressure exerted on the film by the fluid bearing apparatus brought about an attendant increase in edge distortion which is diagrammatically depicted in Figure 7. In addition, and because of the unbalancing or the non-parallelism of porous surface 32 to the pad 39, there appeared in the polypropylene films a greater distortion and puckering in the film area 49 at the open edge of the bearing, i.e., on the lefthand side as shown in Figure 6 than on the righthand film area 50 at the closed side of the bearing. While the films were sealed utilizing these pressures then, the seals were attended by a certain amount of distortion and pucking as shown.

The seals generated in this example and in all the following examples were subjected to a 180$^{\text{O}}$ peel strength test according to ANSI/ASTM F88-68, a standard test method for seal strength of flexible barrier materials. This test method can be found in the American Society of Testing and Materials (ASTM) Book of Standards. Peel strength of the sealed polypropylene in this example for each pressure run was about 0.25 pounds per inch (1lbs./in.).

In another test made with the apparatus set up as shown in Figure 6, two films of low density polyethylene material each of approximately 1 mil in thickness were disposed on the pad 39 and the porous surface 32 was brought to within a distance of about .001 inches to the uppermost film to provide a fluid bearing flow regime as hot air was forced through the porous member and exuded from the surface thereof. The air was raised to a temperature of approximately 350°F and the pressure exerted on the films was approximately 20 psi, the flow rate through the porous member of the fluid being approximately 5.5 cfm. The hot air was applied to the films for approximately 0.5 seconds. This trial resulted in servere edge distortion along the sealed portions of the films and along the films outside the sealed portions. Accordingly, a seal having a peel strength of about 2.65 lbs./in, was produced in the films but it was attended by edge distortion.

EXAMPLE NO. 2

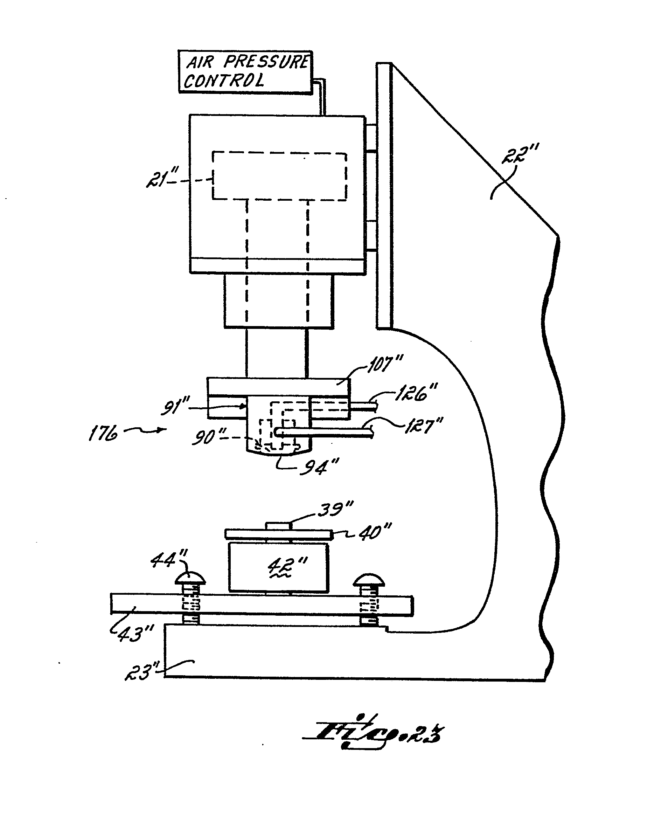

Example No. 2 is depicted in Figures 8 and 9 where the same apparatus as depicted in Figures 4 and 5 was utilized with the addition of two cold air knives 55 and 56 disposed alongside the manifold 26. Each air knife comprises an elongated tube running along the length of the manifold 26 on respective sides thereof. A plurality of apertures are drilled into the tube and face downwardly and inwardly in the directions of the arrows 56 and 58, Figure 8. Polypropylene films as described in Example No. 1 were disposed on the silicon rubber back-up pad 39 and the porous member 31 was lowered to a position spaced from the film. The porous surface 32 was disposed in relationship to the films 59 and 60 such that a fluid bearing flow regime was provided with respect to the air exuding from the surface 32 and between that surface and the film 59. In this example then, as well as the example illustrated in Figure 6, heated air at approximately 350°F exuded from the porous element and moved outwardly in the directions of arrows 61 and 62.

The pressure applied to the film was on the order of 10 psi and the heated fluid was applied to the films for approximately 0.5 seconds. Also, as in Example No. 1, the fluid bearing was unbalanced such that the porous surface 32 was not exactly parallel to the silicon rubber pad 39.

At the same time, however, and differently than in Example No. 1, cooler air provided by the air knives 55 and 56 was directed at the edge areas of the seal. The cool air pressure within the air knives is approximately 50 psi.

As a result of this operation, the films 59 and 60 were sealed to each other in an area 65 (Fig. 9). Peel strength was measured at about 0.25 lbs./in. Some distortion was evident in the areas 66 and 67, however, this distortion was significantly reduced over that of the polypropylene films of Example No. 1, due to the quenching function provided by the air knives 55 and 56 at the edge of the heat seal.

Also to be noticed is that the distortion was somewhat greater in the area 66 toward the open side of the bearing and was close to negligible in the area 67 near the closed side, all as a result of the unbalanced disposition of the bearing.

The set up depicted in Figure 8 was also utilized in connection with two low density polyethylene films of about 1 mil in thickness. For this particular trial, the porous element 31 was lowered toward the film to a distance of approximately 0.001 inches and heated fluid was caused to flow through the porous element at a flow rate of about 4.1 cfm for a time of about 0.45 seconds. The bearing pressure on the film was approximately 20 psi; otherwise, this trial is similar to the trial discussed above in this example with respect to the polypropylene films. This operation on the polyethylene films produced a seal with substantially less edge distortion in the films at the closed side of the bearing, than that in the polyethylene films produced in Example No. 1, but with severe distortion in the films at the open side of the bearing. Peel strength was measured at about 1.72 lbs./in.

The air knives are believed to have somewhat reduced the distortion in the films outside of the sealed area, but did not eliminate edge weld distortion. While the films were sealed, there was still then, severe
distortion evident along the edges of the seal.

EXAMPLE NO. 3

This example is depicted in Figures 10 and 11
and utilizes apparatus according to that shown in Figures
4 and 5. Further, this example is similar to that depicted
in Figure 8 with the exception that the silicon rubber
pad 39 is leveled up such that the porous surface 32
is parallel to the silicon rubber pad 39. In this Example,
two films of the same polypropylene as described in
Example 1 were disposed on the pad 39. The manifold 26
was lowered to a position such that the porous surface 32
was spaced from the film 68 a distance of about 0.001
inches. The temperature of the heated fluid was increased
to approximately 400°F, the pressure on the film exerted
by the bearing was approximately 10 psi, and the heated
air and pressure were exerted on the film for a time period
of approximately 0.5 seconds. The flow rate of the heated
fluid through the porous member was about 3.8 cfm. Thus,
a fluid bearing flow regime between the porous surface 32
and the film 68, for heating the films 68 and 69 and for
pressing these two films together for sealing, was
established.

This operation produced a seal between the two films 68 and 69 in the area 70 as depicted in Figure 11. Peel strength was measured at about 0.35 lbs./in. Accompanying this seal was slight edge weld distortion in the edges of the seal and puckering in the areas 71 and 72 of the films adjacent to the seal. These areas of edge weld distortion and puckering were significantly less than those produced by Example Nos. 1 and 2, except that the edge weld distortion in the area of the films at the closed side of the bearing in Example 2 seemed to be the least of the three examples. The reduction of the distortion, overall, is believed to be due to the balanced bearing, as a result of the parallelism of the porous surface and the back-up pad 39, and as a result of the temperature quenching air knives 55 and 56 at the edges of the heat seal.

In a second trial made with the set up of the apparatus shown in Figure 10, two films of low density polyethylene, each approximately 1.5 mil thick, were disposed on the pad 39. Heated fluid at approximately 350°F was caused to flow through the porous member at about 4.0 cfm. The porous member was lowered to a distance of approximately 0.001" to the uppermost film to exert a pressure of about 10 psi thereon for a time period of approximately 0.5 seconds. Otherwise, this trial was similar to that described immediately above as to the polypropylene films in this example. The seal produced by this operation in the polyethylene films was symmetrical, and was accompanied by edge weld distortion along the edges of the seal.Nevertheless, the seal and the level of distortion were substantially better than those of the polyethylene films in Example Nos. 1 and 2 above. Peel strength is measured at about 2.91 lbs./in.

Each of these examples demonstrate that a fluid bearing flow regime can be effectively used to provide seals in thermoplastic materials, although accompanied by at least some edge weld distortion. The apparatus is suitable to provide seals in the films without fouling of the porous element since it never touches the films. Moreover, the fact that the porous element is operated with respect to the film in a fluid bearing flow regime provides for the transfer of adequate heat to cause film sealing in a relatively short amount of time due to the characteristics of the heat transfer provided by fluid in a fluid bearing flow regime. Additionally, the pressures provided by the relatively low air flow rates in the fluid bearing flow regime are highly desirable in providing the necessary pressure, during the time heat is being applied to the films,in order to cause the films to seal, and without requiring additional downstream compression.

## SINGLE ZONE - DUAL ELEMENT SEALER

Turning now to Figure 12, there is depicted therein a sealing apparatus 75 which is the same as the apparatus 20 shown in Figures 4 and 5, except for the type of back-up means utilized. Accordingly, similar parts of this apparatus are numbered the same as that of Figures 4 and 5 with the addition of a prime.

In this apparatus, it will be appreciated that there is no silicon rubber back-up pad. Rather, this apparatus utilized a fluid bearing back-up means as diagrammatically depicted in Figure 3. Substituted for the pad 39 is a lower sealing apparatus 76 substantially similar to the upper sealing apparatus 75. Lower sealing apparatus 76 includes a manifold 77 having a porous member 78 mounted in the upper area thereof. Such member 78 is like the porous member 31 which has already been described.

The porous member 78 includes a porous surface 79 directed upwardly toward the porous surface 32' of the upper manifold 26'. The manifold 77 is provided with a conduit 80 for the conduction of heated fluid such as air thereto. Thus heated fluid can be directed into the manifold 77 and caused to flow through the porous member 78.

In the use of this apparatus, two thermoplastic films, for example, are conveyed between the respective porous surfaces and the air piston is energized to lower the manifold 26 and thus the porous surface 32' toward the porous surface 79. It is important to note that the surface 32' is lowered to such a distance from the surface 79 that the characteristics of the heated fluid flow between each of the respective surfaces and the films which they face produce a fluid bearing flow regime having the advantages as discussed above. That is to say, that the nature of the fluid flow is sufficient to transfer a sufficient amount of heat and pressure from the fluid to the films to cause the films to seal while they move between the surfaces 32' and 79.

Preferably, the porous surfaces are maintained parallel to each other and to the films. Also, similar heat and pressures, as those described above in Examples 1 to 3 can be provided, the flow rates through the porous members and the fluid temperatures being selected to accomplish this result. The pressures provided by the bearing flow regimes are sufficient to press the films together during the dwell time when they are moved through the space between the two surfaces in order to provide a functional seal in the films.

More particularly, the films can be pulled through the area defined between the surfaces 32' and 79 in order to seal the films as the films are drawn therethrough. Accordingly, the dynamic sealing apparatus shown in Figure 12 is contrasted to the apparatus and operations described above which are directed to a static sealing situation.

In the process described in connection with Figure 12, it is possible to seal films dynamically as they are drawn between the surfaces 32' and 79 without touching those surfaces. This process is thus particularly useful for providing longitudinal seals between two films which are moving in a longitudinal direction, into or out of the paper on which Figure 12 appears, at high commercial sealing speeds, without requiring intermittent stopping or cyclical movement of apparatus for sealing. Since the bearing pressures provided by the bearing fluid flow regime as described herein are sufficient to press the films together, it is unnecessary to provide downstream compression rolls, for example, or any other devices for touching the film while the seal area remains soft or molten. Moreover, it is of course suitable to use cool air knives (not shown in Figure 12) in connection with each of the upper and lower sealing elements 75 and 76 in order to reduce film distortion along the seals produced by this apparatus. Such knives can be disposed with respect to each sealing element as shown in Figure 10, for example.

PREFERRED EMBODIMENT - DUAL ZONE DUAL ELEMENT SCALE

While the foregoing has described the heat sealing of thermoplastic materials in both static and dynamic fashions, and within a fluid bearing flow regime, it is further noted that the sealed areas of the film are subjected to some fluid turbulences at the edge of the heat seal while the film is still soft or molten. For example, in considering Figures 6, 8 and 9, it will be appreciated that escaping heated fluid from the bearing areas swirls as shown by the curled arrows in these figures and creates some turbulence in the film at the edge of the heat seal. While the air knives 55 and 56 as shown in Figures 8 and 9 somewhat reduce this effect, there is still some turbulence causing, in part, distortion such as indicated by Figures 9 and 11. It is to this problem that another aspect of the invention, constituting a preferred embodiment thereof, is primarily directed. In this preferred embodiment, a dual zone sealing element such as those depicted in Figures 12 to 23 is provided. Basically, the dual zone porous body operates to heat and pressurize the films for sealing and to cool the films while they are within the confines of the same pressure area and fluid bearing flow regime. This operates to seal and to cool the films while at the same time minimizing distortion stresses exerted on the films while they are molten or soft.

Considering momentarily Figure 22, there is shown therein a dual zone porous body 90 as seen through two transparent thermoplastic films 92 moving in the direction of the arrow 93. The dual zone porous body 90 has a porous surface 94 (Figure 14) divided into a central zone 95 and a surrounding zone 96. Heated fluid is directed through the porous body to the central zone 95 for the purpose of raising the temperature of the thermoplastic films for sealing and cooler fluid is directed to the surrounding zone 96 for the purpose of cooling the films immediately adjacent those portions of the film which are heated by virtue of the heated fluid exuded from the zone 95.

As viewed then in Figure 22, the dual zone porous body 90 is operable to produce in the moving films 92 a seal 97 in an elongated area otherwise corresponding to the area 95 of the central zone of the porous surface 94. Moreover, and as will be further appreciated, the surrounding zone or the cool zone of the porous body, exudes cooler fluid therefrom so as to cool the films immedately adjacent the seal area 97, both along their side portions and at the downsteam end 98 of the central zone 95.
Not only are the films cooled, but cooling takes place
while the films are under the same pressure profile.
The films are thus not subjected to any interface or
edge turbulences while they are molten or soft.  This
significantly reduces and in may cases eliminates edge
weld or seal distortions and adjacent film puckering.

Returning now to Figures 13 and 14, it will
be appreciated that the porous body 90 is integrally
constructed with septum means 101 for separating the
zones 95 and 96 of the porous body.  Septum 101 comprises
an elongated thin walled conduit member shaped to fit
within the recess 102 of the porous body 90, that
recess corresponding to the central zone 95 of the porous
surface 94 of the porous body 90.  Of course, the porous
body may be made of the same materials and in the same
general manner as the porous body of Figures 4 and 5.

In order to further control the flow of heated
fluid which is to be conducted through the septum and
into the porous body, the septum is fitted into place
integrally with the porous body.  Spacer pins 103 are
inserted into the septum as shown in Figure 13 and more
particularly, in Figure 14 in expanded form.  The pins
can be secured in position by any suitable means, such as by welding, or press fitting.

Alternately, a porous plug of similar material as the porous member could be inserted into the lower end of the septum, and an open celled foamed metal core may be inserted into the septum above the porous plug for the purpose of strengthening the septum.

Accordingly, the porous member includes both the porous body 90, the septum 101 mounted in the recess 102 of the porous body 90, and the pins 103 disposed at a bottom end of the septum 101 and within the recess area 102.

The porous body and the various elements 101 to 103 are mounted in a manifold 91 as shown in Figure 13. The manifold 91 includes two end walls 105 and 106, a top wall 107, and forward and rearward walls 108 and 109 (the forward wall 108 is not shown in Figure 13). The manifold 91 provides means for introducing heated and cooled fluids therein to the various zones of the porous body as will be described. Preferably, a cooled fluid port 112 is provided at one end of the manifold 91 and in, for example, the end wall 106. The heated fluid port 113 is directed into an upper area of the septum 101. The septum 101 extends into the top wall 107 of the manifold 91 and a heated fluid port 113 is provided in an upper area of the manifold 91 but at the same end thereof as the cooled fluid port 112. The heated fluid port 113 is constructed so that heated fluid is only admitted to the interior of the septum 101. Cooled fluid admitted through the port 112 is free to flow around the septum and above the porous body 90 within the manifold 91. It will be noted that the fluids preferably flow generally from one end of the manifold to the other in co-current flow directions; however, countercurrent flow has been demonstrated and might be preferred in some case. Also, it is to be noted that there are no heating or cooling devices in the manifolds themselves. Fluids are heated and cooled, and materially conditioned as necessary by a suitable external means.

Both the cooled and the heated fluids are pressurized such that they can be made to flow through the porous body, the heated fluid exuding from the central zone 95 and the cooled fluid exuding from the surrounding zone 96 of the porous surface 94.

The dual zone sealing element as has been described with respect to Figures 13, 14 and 22 is mounted for the purposes of this description, in a lab sealer like that which has already been described with respect to Figures 4 to 12. Like parts will thus be designated by double primed numbers.

Accordingly, as shown in Figures 16 and 17 a Model 205 Hot Die Blister Heat Sealer of the lab type as manufacturered by Packaging Industries Inc. of Hyannis, Massachusetts is utilized to support an upper sealing element 120 and a lower sealing element 121, each comprising dual zone elements as has been described with respect to Figures 13, 14 and 22. The lab sealer includes an air piston 21" mounted on a substantial C-frame 22". The air piston 21" is connected to an air pressure control means (Figure 17) for the purpose of pressurizing the air piston to lower the lower end 25" thereof so as to move the upper dual zone sealing apparatus 120 toward the lower dual zone sealing apparatus 121.

For the purpose of clarity, several features of the sealer have not been shown in the drawings of Figures 16 and 17. For example, the lab sealer may also include stabilizer rods or bars extending from the top portion of the frame 22" downwardly for the purpose of engaging the apparatus mounted at the lower end 25" of the air piston in order to maintain it against rotation. Such devices may be spring loaded in order to assist the rapid return of the piston to an upper position such as that shown in Figures 16 and 17.

The upper dual zone sealing element 120 includes manifold 91 and the lower dual zone sealing apparatus 121 includes an identical 91 as has been described with respect to Figures 13 and 14. These manifolds 91 are mounted so that their porous bodies 90 have their porous surfaces 94 facing each other. The upper dual zone sealing apparatus 120 includes a conduit 126 connected to port 113 for the purpose of introducing heated fluid into the interior of the septum 101. A second conduit 127 is connected to a port 112 for the purpose of introducing cooled fluid into the area of the manifold surrounding the septum 101. Likewise, for the bottom dual zone sealing element 121, a conduit 128 is connected to a port 113 for the purpose of conducting heated fluid to the interior of the septum 101 and a conduit 129 is connected to a port 112 for the purpose of conducting cooled fluid to the area surrounding the septum 101. Thus, the upper and lower dual zone sealing apparatus 120 and 121 are mounted opposing each other and in corresponding relationship such that each has a central zone 95 and a surrounding zone 96 in their respective porous surfaces 94. The lower dual zone heat sealing element 121 is mounted so as to be adjustable in order to provide a very close parallel relationship between its porous surface 94 and the porous surface 94 of the upper heat sealing element 120.

More particularly, the lower dual zone heat sealing element 121 includes a bottom plate 132 indented to rest on a spherical bearing 133. Bearing 133 is mounted on a load cell 134 connected by means (not shown) to any appropriate electronic signal analyzing readout apparatus for indicating pressure exerted on the films between the sealing elements.

Each end of the manifold 91 of the lower dual zone heat sealing element 121 is provided with two pins 135 extending therefrom. Bolts 136 and 137 are mounted in a base plate 138 of the C-frame 22" and have their heads disposed over the pins 135. Ideally, when the manifold 91 is properly positioned, the heads of the bolts 136 and 137 will not engage the pins or the ends of the manifold, rather these bolts are simply provided for the purpose of maintaining a near parallel relationship of the porous surfaces 94-94 and act as a stop to keep the lower manifold 91 and porous surface 94 from rotating or moving severly from horizontal plane.

The lower manifold 91 is also positioned by means of a pair of diagonally oriented out rigger shafts 139 and 140, each of which are supported by respective scissor jacks 141 and 142. The jacks are adjustable so that the entire manifold, through the means of the jacks and the outriggers 139 and 140, can be angularly rotated and moved on the bearing 133 in order to have the lower porous surface 94 thereof paralleled with the upper porous surface which is fixed in a horizontal disposition. Of course, in a production apparatus, the manifolds may be more precisely aligned without requiring this type of adjustment means as has been described.

Finally, it will be noted that the porous surfaces 94 are not entirely flat, but are tapered along their edges and at their ends adjacent a central flat area of surface 94. These tapers are shown in Figures 13, 14, 17, 18 and 20. As will be described, these tapers are not necessarily coextensive with zone 96 of surface 94, but in a preferred embodiment are located totally within such zones. The tapers are functional to define flow interface areas between the central flat area 146 and the exterior of the sealing element.

Accordingly, it will be appreciated that the apparatus described in Figures 16 and 17 provides a dual zone two element sealing apparatus which has the features shown diagrammatically in Figure 15 for sealing films D and E together.

More particularly, from Figure 18, it will be appreciated that the porous surfaces 94 of the upper and lower porous bodies 90 include opposedly oriented flat areas 145 and 146 in which the heated zone 95 of each porous surface is located and in which a portion of the cooler zone 96 of each porous surface is located. While the cool zone 96 totally surrounds the heated zone 95, there is preferably no specific definition in the porous surface itself of the demarcation between the zones 95 and 96. Accordingly, it will be appreciated that the septums 101 are inserted into the porous bodies 90 to a depth such that the zones in the porous surfaces 94 are rather well defined by the temperatures differentials of the fluids which are conducted through the porous body from the interior of the septum and from the exterior of the septum into two different zones.

Accordingly, it will be appreciated that the apparatus described in Figures 16 and 17 provides a dual zone, two element sealing apparatus which has the features shown diagrammatically in Figure 15 for sealing films D and E together.

In use then, the air pressure control is energized to lower the air piston 21 and thus to lower the upper porous surface 94 toward the lower porous surface 94. In a dynamic sealing operation, films such as those indicated at 92 in Figure 22 are disposed to be drawn through the space between the opposed porous surfaces 94 while heated fluid is supplied through the interior of the septums 101 in order to seal the films in the predetermined area 97 (Figure 22) as the films are moved therethrough.

Most importantly, it is to be appreciated that in accordance with this preferred embodiment of the invention, the porous surfaces 94 are disposed close enough to each other such that they generate a true fluid bearing flow regime between each of the surfaces respectively and the films drawn therebetween. Accordingly the porous surfaces are disposed at a distance which corresponds to the distance from zero to the point 12 in the graph shown in Figure 1 of the drawings and, preferably, at a distance somewhere between zero and the point 12 in order to provide a suitable bearing load on the films as the films are drawn therethrough.

The following Examples 4 and 5 illustrates the use of the apparatus as has been described in connection with a sealing operation wherein two films are sealed together (Figure 15). Of course, the appratus as has been described and particularly the dual zone porous members can be utilized in any form of sealing operation where it is desired to heat seal sealable materials together. While the apparatus will be described in connection with the sealing of two flat films, the dual zone porous bodies described herein could be used in connection with sealing films to other types of materials and for sealing other kinds of materials to each other in both flat and configured shaped.

EXAMPLE NO. 4

This example was set up as illustrated in Figure 18 wherein the lower manifold 91 was purposefully disposed in non-parallel alignment with the upper manifold 91, i.e., such that the flat surface 145 was at an angle to the flat surface 146. This produces what we refer to as an unbalanced bearing. The surface 146 was lowered to a position with respect to surface 145 such that a true fluid bearing flow regime could be established between each of the respective surfaces and films therebetween, even though the distances between respective points varied. Thermoplastic films 151 and 152 were then drawn between surfaces 145 and 146 for sealing.

Of course, it will be appreciated that as the films move through the apparatus, they are actually drawn toward or away from the viewer as shown in Figure 18, or to the left and right as viewed in Figure 16. The directions to the left and righthand side of Figures 18 and 20 correspond to the same left and right directions as viewed in Figure 17.

The films 151 and 152 comprise the same polypropylene films described above in the foregoing examples 1 to 3 with the exception that the polypropylene is .085 gauge. Hot fluid at a temperature of approximately $225^{O}F$ was supplied to the respective upper and lower septums 101 as indicated by the arrows 155. Cooler fluid at approximately $73^{O}F$ was supplied to the respective manifolds as indicated by the arrows 156. The flow rate of the heated fluid at about $225^{O}F$ measured approximately 4.5 cfm (at 22 psi and $73^{O}F$ temperature before the fluid was heated). The flow rate of the cool fluid was approximately 9.4 cfm at 35 psig manifold pressure.

The resulting pressure on the films exerted by the fluid bearing flow regime supporting each film was approximately 2 psi, and the film was drawn between the porous bodies at a speed such that an arbitrary point on the moving film dwelled within the elongated heated zone 95 (Figure 22) for approximately .2 seconds.

Sealing of the film under these conditions provided substantially improved seals over the previous Examples. The moving web did not track in a straight line and this was thought to be caused by the unbalanced circumstance of the bearing. The nature of the sealed together films in cross-section is illustrated in Figure 19 where a seal 160 was produced between the two films, and only slight waviness, indicated at 161 and 162, appeared in the films adjacent the sealed area 160. Moreover, the puckers in the films in areas 161 and 162 adjacent the seal areas 160 are believed to be limited to such film waviness as was caused by web tension due to hand drawing the films through the sealer, and there was no edge weld distortion along the edges of the seal area. Slightly more waviness is found in the films at are 161 since that was the side corresponding to the more open side of the boundary layer. Peel strength was measured as described in Example 1 above, and found to be about 0.70 lbs./in.

In a second trial corresponding to this example, low density polyethylene films of approximately 1 mil in thickness were drawn through and between the two porous bodies 90. In this trial, the temperature of the heated fluid was approximately 260°F and the films were drawn between the porous bodies at a speed corresponding to a dwell time of any arbitrary point on the film of about .2 seconds. The flow rate of the heated fluid through the porous bodies was approximately 8.2 cfm and the flow rate of the cool fluid through the porous bodies was approximately 6.8 cfm. The pressure exerted by the bearings on the film was approximately 3 psi. The polyethylene films sealed together, however, there was a significant amount of edge weld distortion in the films in the seal area. Peel strength was measured at about 1.58 lbs./in.

EXAMPLE NO. 5

In this example, the apparatus is set up as illustrated in Figure 20 and polypropylene films 166 and 167 (like films 151 and 152) were drawn between the porous bodies 90 to effect a seal between the films. In this embodiment, the apparatus was adjusted so that the porous surfaces and particularly the flat areas 145 and 146 were parallel to each other. In this example, the porous bodies were brought toward each other by means of the air piston such that there was approximately .001 inch between the respective surfaces 145 and 146 and the respective films 167 and 166 which face those surfaces. In addition, the parallelism of the porous surfaces 145 and 146 were maintained within a tolerance of about 0.0005 inches, and the bearing provided by the fluid exuded from the porous bodies was thus considered to be balanced. Other factors were the same as Example No. 4. The seal produced in the polypropylene films was as is shown in Figure 21 and was of commercially acceptable quality for openly visual seals. Peel strength, measured as described above, was about 0.70 lbs./in.

A seal 172 area was provided between the films 166 and 167 between unsealed areas 173 and 174. The seal provided was without significant distortion and, furthermore, the films in the areas 173 and 174 adjacent the seal area 172 were also substantially without distortion or puckering, producing a commercially and visually acceptable seal. Any slight film waviness appearing in areas 173 and 174 were believed to be caused by a slight tracking wander of the films as they were hand drawn through the sealer. Of course, in a production apparatus, the film would be very stably handled by any suitable mechanical means, preferably outside the bearing areas, and all waviness would be potentially eliminated.

In a second trial run, with the apparatus set up as illustrated and described in this example, with respect to Figure 20, two films of low density polyethylene of about 1 mil thickness were run between the two porous bodies under the same conditions described with respect to the polyethylene trial of Example No. 4 herein (except here the bearing was balanced). The seal produced by such an operation between the two films resulted in some film distortion of the seal edges, however, the films were successfully sealed together, with one edge having no distortion and only slight film waviness. Some waviness and distortion was believed to have been caused by the relatively unstable hand drawing of the films through the sealer. Peel strength was measured at about 1.58 lbs./in.

From this description of the preferred embodiment of the invention, and particularly that of Figures 13 to 17, 20, and 22, including new and improved sealing methods and appratus, many unique features and advantages will be appreciated. First, it will be appreciated that the methods and apparatus described herein provide a non-physical contact sealing process, capable of transferring sufficient heat and pressure to two or more layers of thermoplastic films within a well defined area and then cooling the films while still under the same pressure, in order to prevent distortion or puckering in the seal area or in the films adjacent the seal area. The sealing and simultaneous cooling of the preferred embodiment all take place within a well defined true fluid bearing flow regime area such that the forces imparted to the molten or softened film by the characteristics of the fluid net out to be zero, thereby reducing film tension and stresses which cause distortion. Accordingly,the films is cooled along its edges and along its leading edge before it must be removed from the fluid bearing area. The time in which the film must remain molten or soft for sealing, and during which the film must be handled, is substantially reduced.

Dual Zone - Single Element Heat Sealer

A modification of the preferred embodiment of the invention is shown in Figure 23. This modification contemplates the use of a single element, but dual zone seal like that of Figures 13 through 22, but cooperating statically with a silicon rubber back-up pad 39''' like that of Figures 4 and 5.

This modification thus varies from the single zone porous body which has been described with particular reference to Figures 4 and 5.

The features of the apparatus shown in Fig. 23 are designated by primed numbers corresponding to the apparatus shown in Figs. 4 and 5 with the exception of the dual zone sealing element 176''' which corresponds to the upper sealing element 120 of the preferred embodiment as shown in Figs. 16 and 17. Accordingly, the features of the dual zone single element 176''' in Fig. 23, which are identical to those of the upper sealing element 120 of Fig. 17, are shown also with triple primed numbers.

The operation of the modified embodiment of Fig. 23 is similar to that operation of the apparatus of Figs. 4 and 5 with the exception that the dual zone sealing element 176''' is operative to provide an improved seal in heat sealable materials such as films as have been described. Utilization of the dual zone sealing element in connection with the back-up means or silicon rubber pad 39'' as shown in Fig. 23 is useful where it is desired to produce a seal in stationary films, for example.

In use, thermoplastic films are disposed on the pad 39''' and the surface 94''' is lowered by piston 21''' to a distance from the films such that a true fluid bearing flow regime is established between the surface 94''' and the films for sealing them together. Heated fluid through a central heated zone in surface 94'''
heats and pressurizes the films for sealing while cooler
fluid in a cooler surrounding zone of surface 94'''
continues to pressurize the films but cools them also.

The foregoing preferred embodiment and the
embodiment of Fig. 12 has included apparatus suitable for
producing seals in films moving in a dynamic fashion, such
as where the fluid bearing is produced on each side of the
film. It is important to note, however, that the static
apparatus disclosed in Fig. 23, and in Figs. 4 and 5,
utilizing a stationary back-up pad, are suitable for
producing seals either when the film is stationary, or when
moving and the sealing apparatus is constructed to move
cyclically with the films and not relative thereto during
sealing.

Accordingly, in a commercial sealing operation,
it may be desirable to produce longitudinal seals in films
by means of the two element sealer such as shown in
Figs. 16 and 17, for example, and to produce transverse
seals in the same films at another station by back-up pad
apparatus such as that shown in Fig. 23. In such
apparatus, the sealing element 176''' and the back-up
pad 39''' could be positioned to cyclically approach and seal the film when the film is intermittently held stationary. Alternately the element 176''' and pad 39''' are respectively mounted on rotating members to move the sealing element and the back-up pad along with the film in order to produce a seal therein as the film continuously moves.

The preferred dual zone porous member described herein is particularly advantageous when any intermittent film motion or intermittent sealing is contemplated. For example, one advantage obtained by the dual zoning concept of the invention is the possibility to quickly and efficiently vary the temperature of the fluids to rapid control the heat applied to the films. Because the fluids are heated at a distance from the manifolds 91, cooling fluid can be instantaneously vented into the septum 101 for cooling zone 95 immediately. This could eliminate burning of the films when they may be stopped in the bearing area. Also, intermittent heating and cooling of fluid supplied to the septum 101 could be used to produce intermittent seals in films moving continuously through the area seal/without changing the pressure profile through which the film moves. This would substantially reduce or eliminate film distortion or puckering. More particularly, the temperature of the fluids can be controlled even for intermittent seals, the films always being in the same fluid bearing pressure profile when molten or softened. Of course, the ability to instantaneously apply preheated fluid through septum 101 eliminates poor sealing due to insufficient heat on any start-up of the operation.

Of course, these features are important and can be advantageously used in connection with operation of the apparatus of the preferred embodiment of that of Figure 23.

Other Applications and Advantages

The dual zoning concept provided by the preferred embodiment of the invention produces many other advantages. For example, the independent gas flows can be used to provide for control of temperature transition rate changes between the zones in the face areas of the porous body. Moreover, multiple zoned porous bodies could be provided for obtaining a plurality of seals in a single sealing operation. Multiple temperatures in connection with multiple zones in a porous body can be used for the adjustement of seal width, seal strength, and desired edge definition. Also, by the utilization of multiple zones, the variable bearing stiffness in each of the zones can be adjusted in order to accomplish desired package of film alignment in addition to desired sealing width, strength and edge definition.

It will further be appreciated that multiple bearing sealing elements could be used within the scope of the invention. For example, a single elongated bearing element on one film side and two separate bearing elements on the opposing side could be used to permit sequential joining of two films, then an additional film thereto, the additional film being introduced between the two separated bearing elements. Many other seal and material configurations can be readily appreciated and produced by the use of either multiple zones, multiple sealer elements, or combinations or both.

In another aspect of the invention, it should also be noted that pressures lower than atmospheric pressures can be used to advantage in the zones of the porous air bearing sealing elements. For example, a negative pressure in the outer zone surrounding the hot zone in a dual zone bearing element can be induced by reducing pressure in the manifold chamber surrounding septum 101. This can be done by a vacuum pump or any suitable means connected to port 112 (Figure 13) and will function to draw off the hot air through the porous member and in the corresponding outer zone area, and will thus also cool the film adjacent the hot zone within the seal area.

Such operation may be highly desirable in certain areas where the materials do not tend to stick to the bearing elements or where opposed bearing elements permit pressure balancing for film control.

A further application of the invention, is found in the handling of seals in materials of, or covering, various shapes. The porous elements can be moulded to many different shapes to accommodate varied sealing area configurations as desired, and can be used where the product or article to be sealed within the film forms the back-up support for sealing.

Many advantages are provided by the invention, whether or not the preferred embodiment of dual zoning is used. For example, while the heat sealing of films requires subjecting them to a combined profile of heat, pressure and dwell time, this invention minimizes dwell time by the utilization of true fluid bearing flow regime. This is due to the highly efficient transfer of heat, from the heated fluid used, to the films to be sealed. Accordingly, for any sealing operation, the dwell time of the film in the seal area is substantially reduced.

Moreover, because of the high coefficient of heat transfer provided by the operation of the process and the fluid bearing flow regime, lower temperature differentials between the film sealing temperature and the temperature of the fluids can be used. This translates into a higher possible speed of sealing operation than those operations produced by the devices of the prior art, and without requiring extensively lengthly sealers.

Speed of operation is also increased and elimination of extensive equipment is provided since the use of the true fluid bearing flow regime produces sufficient pressure for sealing without need for downstream compression stations.

Also, the processes and apparatus which have been described above provide extensively variable parameters which can be varied to suit any sealing requirement. Primarily, temperatures and pressures can be varied as desired to produce many desirable sealing strengths in the same materials.

A variety of materials may be sealed by utilizing the concepts and the processes provided by this invention. Polypropylene, polyethylene and other homogeneous and heterogeneous films for flexible packaging or laminated film or paper could be handled by this process as well as various multi-layered films and coated porous substrates such as hot melt adhesive coated paper or plastic film laminated to paper or to woven or non-woven textiles. All of these can be handled according to the processes of the invention, desribed herein, and thus the term "heat sealing" includes sealing of films together by rendering the films at least tacky for sealing, or by heating at least a coating on the films for sealing purposes.

It should further be appreciated that many different types of fluids could be utilized for heating and for cooling. For example, air or nitrogen might be used to provide adequate heat transfers while remaining relatively inert and economical. Hydrogen or helium, which heat while expanding, could be used for the highest possible heat transfer coefficients. Other gases, such as carbon dioxide which has a food preservative quality for sealing food packages, could be used.

Of course, while a particular lab sealer has been described herein for clarity of illustration in connection with the invention, it will be appreciated that many different forms of apparatus could be adapted for handling and sealing materials in accordance with the invention without use of the particular lab sealer frame and piston described.

In still another aspect of the invention, it will be clear from the foregoing that while heat sealing is advantageously performed according to the invention, the invention also broadly contemplates other forms of sealing or pressurization of films or webs where heat is not required or does not play a critical part. For example, the invention is particularly useful for sealing materials together through the expedient of pressure-sensitive adhesives or of gas or steam-activated adhesives which do not require the application of heat, but only of sufficient sealing pressure.

Exemplary of this aspect of the invention, one pressure adhesive coated web could be pressed against and sealed to another by conveying or placing them between any sealing element and back-up means (including conveyance between two sealing elements) as described herein. In this regard, the fluid bearing flow regime could be maintained so as to provide significant sealing pressures to promote sealing.

Moreover, the apparatus described herein, including a silicon rubber back-up pad, is particularly useful for continuous pressure-sensitive sealing since the coated film is not usually rendered molten and sliding of it across the back-up pad would not be determined.

It will be appreciated that single or dual sealing elements of single or multiple zones thus can advantageously be used for sealing without requiring supplemental sealing pressures such as by direct contact rollers, pads and the like.

Accordingly, it will be appreciated that the invention provides for the utilization of a true fluid bearing flow regime for the purpose of sealing materials together. The invention also contemplates the utilization of a dual zone heat sealing porous member for the purpose of heating heat-sealable materials and for cooling such materials while the materials remain in the fluid bearing flow area in order to eliminate distortion or puckering in the seals and in the films. These and many other advantages and modifications will become readily apparent to those of skill in the art without departing from the scope of this invention, and the applicants intend to be bound only by the claims appended hereto.

+1+

1.      A method for heat sealing materials together including the steps of: passing the materials through at least one fluid bearing sealing area , which area is defined in part by at least one porous member having a porous surface, transmitting heated fluid through the porous member at a temperature sufficient to raise the materials to a temperature at which they can be heat sealed together in a predetermined location, and maintaining a predetermined distance between the porous surface and the materials and predetermined fluid flow rate through the porous member to generate a fluid bearing flow regime to support and compress the materials for heat sealing.

2.      A method of heat sealing materials together including the steps of: passing said materials through at least one fluid bearing sealing area defined in part by at least one porous member having a porous surface, transmitting heated fluid through said porous member at a temperature sufficient to raise said materials to a temperature at which they can be heat sealed together in a predetermined location, and maintaing a predetermined distance between said materials and said porous surface such that fluids exuding from said porous surface produce a substantially laterally moving, non-stagnant, heated fluid layer between said materials and said porous surface, said fluids transferring sufficient heat to said materials and pressing them together such that said materials are sealed within said area.

3. A method as claimed in Claim 2, wherein said predetermined distance is about 0.005 to about 0.0015 inch.

4. A method as claimed in Claim 3, wherein said materials are pressed together by pressures ranging from about 2 psi to about 20 psi.

5. A method as claimed in any of the preceding claims wherein the bearing sealing area is defined by two opposed porous members having porous surfaces facing each other in substantially parallel alignment, said materials passing therebetween, the fluid transmitted through at least one of said surfaces being at a temperature sufficient to raise said materials to a temperature at which they can be heat sealed together in a predetermined location, the predetermined distance being maintained between said porous surfaces and said material.

6. A method as claimed in Claim 5, including the step of transmitting heated fluids through both of said porous members to provide heated fluid bearing flow regimes between each of said porous surfaces and said materials.

7.    A method for heat sealing materials together including the steps of: passing said materials through a sealing area defined by at least one porous surface having two zones therein, transmitting fluid through one of said zones at a first temperature sufficient to raise said materials to a temperature at which they can be heat sealed together in a predetermined location, transmitting fluid through a second of said zones at a second temperature lower than said first temperature for thereafter cooling said materials at least adjacent said predetermined location and while said materials are in said sealing area, said materials being pressed together within said sealing area during said heating (and cooling) by means of the pressure of said fluids emerging from said porous surface in at least one of said two zones.

8.    A method as claimed in Claim 7 in which the sealing area is defined by a porous member having a porous surface and a back-up means, said porous surface having at least two zones.

9.    A method as claimed in Claim 7 or 8 in which the fluids transmitted through the zones support said materials spaced from said porous surface and press them together as they pass through said area, and in which said fluids exude from said surface at such a rate as to provide a fluid bearing flow regime between said surface and said materials, said fluids supporting said materials, while they are heated and cooled, substantially free of oscillation and lateral stresses for effecting a distortionless seal in a predetermined area of said materials.

10.     A method for dynamically sealing thermoplastic films together in a single sealing area wherein said films are pressed together, heated to a temperature for sealing, and cooled, all while in said area, said sealing area being defined by two porous members having respective opposed porous surfaces disposed in spaced parallel relation to each other and each surface having two zones, said method comprising the steps of: transmitting fluids through respective zones in said porous surfaces, passing said films together between said surfaces, said fluids supporting said films away from said surfaces and pressing them together as they pass therebetween, heating fluid passing through one of said zones in at least one of said surfaces for raising the temperatures of said films to a temperature sufficient for sealing them together, and maintaining fluid passing through another of said zones in said one surface at a sufficient temperature for cooling said heated films, said fluids supporting said films, while they are heated and cooled, for heat sealing said films in a predetermined area of said films within said sealing area.

11. A method as claimed in any of Claims 7 to 10, wherein the sealing area comprises a fluid bearing flow regime region.

12. A method as claimed in any of Claims 7 to 11, wherein said surfaces are each maintained at a distance of about 0.0005 to about 0.0015 inch from said films.

13. A method as claimed in any of Claims 7 to 12, wherein said films are pressed together within the approximate range of from about 2 psi to about 20 psi.

14. A method as claimed in any of Claims 7 to 13, wherein said sealing area comprises a jet impact flow regime region.

15. Apparatus for sealing materials together by the application of pressure and heat thereto in a sealing area, comprising, at least one sealing element including a porous member for passing fluid therethrough, said porous member including a porous surface defining a single heat seal area, means for supplying fluid under pressure to said porous member for emerging from said surface, means for heating said fluids to a temperature sufficient for heat sealing said materials, and back-up means spaced from said porous surface for holding said materials at a predetermined distance from said porous surface, whereby pressurized fluid emerging from said surface comprises a fluid bearing flow regime comprising a fluid bearing supporting said material away from said face, heated fluids emerging from said porous surface heating, pressuring and sealing said materials together within said single seal area.

16. Apparatus as claimed in Claim 15 including air knife means disposed along edges of said porous surfaces for directing cooling air onto said materials at said edges.

17. Apparatus for sealing materials together by the application of heat thereto in a single heat seal area, said apparatus comprising, at least one sealing element defining a single heat seal area and comprising a porous member for passing fluid therethrough, said porous member including a porous surface with at least two zones, means for supplying two independent fluid streams under pressure to said porous member for emerging from said surface in said respective zones, means for heating one fluid stream supplied to one zone of said porous surface, to a temperature sufficient for heat sealing said materials, means for cooling another fluid stream, supplied to another zone, to a lower cooling temperature to said other zone, and whereby heated fluids emerging from said one zone raise the temperature of said materials for heat sealing said materials together, and whereby cooler fluids emerging from said other zone cool said sealed materials within said heat seal area.

18. Apparatus as claimed in Claim 17 including back-up means spaced for said porous surface for holding said materials at a predetermined distance from said face.

19. Apparatus as claimed in Claim 18, wherein said back-up means hold said materials at a predertimed distance from said surface such that fluids exuding from said surface comprise a fluid bearing flow region supporting said materials from said surface and pressing them together for complete heat sealing within said seal area.

20. Apparatus as claimed in Claim 18 or 19, wherein said porous member is mounted on a piston for moving said porous member to said predetermined distance from said back-up means such that a fluid bearing flow region is established between said porous surface and said materials.

21. Apparatus as claimed in any of Claims 18 to 20 wherein said back-up means comprises a second porous member having a second porous surface disposed in substantially parallel alignment with the first porous surface, said second porous member being mounted in a position to maintain parallel alignment between said surfaces and wherein a fluid bearing flow region is established between each of said porous surfaces and materials to be heat sealed therebetween.

22. A porous member for use in apparatus as claimed in any of Claims 15 to 21 having a porous surface with pores from about 3 microns to about 10 microns, plenum means for supplying at least two independent fluid streams to said member, and said porous surface having at least two zones, each zone communicating respectively with said plenum means rearwardly of said porous surface for supplying fluid to each said zone independently of the other zone.

23. A porous member as claimed in Claim 22, wherein a first one of said zones surrounds a second one of said zones, and said plenum means including a plenum chamber communicating with said second zone.

24. A porous member as claimed in Claim 22 or 23, including a septum defining said plenum chamber.

25. A porous member as claimed in Claim 24 including spacer pins in a lower end of said septum defining said plenum chamber.

26.       A method for dynamically sealing thermoplastic films together in a single sealing area wherein said films are pressed together, heated to a temperature for sealing, and cooled, all while in said area, said sealing area being defined by two porous members having respective opposed porous surfaces disposed in spaced parallel relation to each other and each surface having at least two zones, said method comprising the steps of: transmitting fluids through at least one respective first zone in each of said porous surfaces, passing said films together between said surfaces, said fluids supporting said films away from said surfaces and pressing them together as they pass therebetween, heating fluid passing through each of said one of said zones in at least one of said surfaces for raising the temperatures of said films to a temperature sufficient for sealing them together, and drawing said fluids away from said sealing area through at least one respective second zone in each of said surfaces in said sealing area, for cooling said heated films, said fluids transmitting through said first zones supporting said films, while they are heated, for heat sealing said films in a predetermined area of said films within said sealing area.

27.     Apparatus for sealing materials together by the application of heat thereto in a single heat seal area, said apparatus comprising, at least one sealing element defining a single heat seal area and comprising a porous member for passing fluid therethrough said porous member including a porous surface with at least two zones, means defining two independent fluid passageways to said porous member for communicating with said porous surface and with respective zones thereof, means for heating and supplying fluid stream in one passageway to one zone of said porous surface, at a temperature sufficient for heat sealing said materials, and means for reducing pressure in another passageway to draw heated fluids from said heat seal area, whereby heated fluids emerging from said one zone raise the temperature of said materials for heat sealing said materials together, and whereby heated fluids are withdrawn through said other zone from said heat seal area to cool said sealed materials within said heat seal area.

28.     Apparatus as claimed in Claim 27 wherein said means for heating and supplying a fluid stream to one zone generates a fluid bearing flow regime between the porous surface in said one zone and materials proximate thereto.

25

29.    A method for sealing materials together including the steps of: passing said materials through at least one fluid bearing sealing area, said area defined in part by at least one porous member having a porous surface, transmitting fluid through said porous member for pressing said materials together, and maintaining a predetermined distance between said porous surface and said materials and a predetermined fluid flow rate through said porous member to generate a fluid bearing flow regime supporting and compressing said materials for sealing.

30.    A method for sealing materials as claimed in Claim 29 wherein the said at least one fluid bearing sealing area is defined by two opposed porous members having porous surfaces facing each other in substantially parallel alignment, said materials passing therebetween, the fluids being transmitted through both surfaces.

31.    A method for heat sealing materials together including the steps of: passing said materials through a sealing area defined by at least one porous surface having multiple zones therein, transmitting fluid through one of said zones at a first temperature sufficient to raise said materials to a temperature at which they can be heat sealed together in a predetermined location, transmitting fluid through a second of said zones at a second temperature lower than said first temperature for thereafter cooling said materials at least adjacent said predetermined location and while said materials are in said sealing area, said materials being pressed together within said sealing area during said heating and cooling by means of the pressure of said fluids emerging from said porous surface in said two zones.

32.    Apparatus for sealing materials together by the application of pressure thereto in a sealing area, said apparatus comprising, at least one sealing element including a porous member for passing fluid therethrough, said porous member including a porous surface defining a single seal area,  means for supplying fluids under pressure to said porous member for emerging from said surface, and back-up means spaced from said porous surface for holding said materials at a predetermined distance from said porous surface, whereby pressurized fluid emerging from said surface comprises a fluid bearing flow regime comprising a fluid bearing supporting said material away from said face, fluids emerging from said porous surface, pressuring and sealing said materials together within said single seal area.

33.    Apparatus for sealing materials together by the application of heat thereto in a single heat seal area, said apparatus comprising, at least one sealing element defining a single heat seal area and comprising a porous member for passing fluid therethrough, said porous member including a porous surface with multiple zones, means for supplying independent fluid streams under pressure to said porous member for emerging from said surface in at least two of said respective zones, and for generating a fluid bearing flow regime between said porous surface and materials proximate thereto, means for heating one fluid stream supplied to one zone of said porous surface, to a temperature sufficient for heat sealing said materials, and means for cooling another fluid stream, supplied to another zone, to a lower cooling temperature, whereby heated fluids emerging from said one zone raise the temperature of said materials for heat sealing said materials together, and whereby cooler fluids emerging from said other zone cool said sealed materials within said heat seal area.

34.    A method for sealing materials together including the steps of: passing said materials through a sealing area defined by at least one porous surface having multiple zones therein, transmitting fluid through one of said zones, and transmitting fluid through a second of said zones, said fluids generating a fluid bearing flow regime compressing said materials together within said sealing area.

0044206

1/8

**Fig. 1**

**Fig. 2**

**Fig. 3**

Fig. 4

Fig. 5

AIR PRESSURE CONTROL

HEATED FLUID

0044206

Fig. 6

Fig. 7

Fig. 8

Fig. 9

Fig. 10

Fig. 11

418

AIR PRESSURE
CONTROL

22'

21'

25'

75

26'
31'
32'

24'
← HEATED
FLUID

35'

*Fig. 12*

79
78
77

76

HEATED ←
FLUID

80

40'

44'

42'

43'

44'

23'

101
102
103
90
94

D

E

90
103
102
94
101

*Fig. 15*

5/8

Fig.13

Fig.14

Fig.16

Fig.17

AIR PRESSURE CONTROL

718

*Fig. 18*

*Fig. 19*

*Fig. 20*

*Fig. 21*

*Fig. 22*

AIR PRESSURE
CONTROL

21"

22"

107"

91"

126"

176

90"

127"

94"

39"

40"

44"

42"

43"

23"

Fig.23